# EUROPÄISCHE PATENTSCHRIFT

(11) **EP 3 205 563 B1**
(45) Veröffentlichungstag und Bekanntmachung des Hinweises auf die Patenterteilung: **07.07.2021**
(21) Anmeldenummer: 16155191.6
(22) Anmeldetag: 11.02.2016
(51) Int. Cl.: E01H 4/02, B62D 55/30, B62D 55/06, B62D 55/116, B62D 55/112

(54) **PISTENRAUPE ZUR PFLEGE UND GESTALTUNG VON SCHNEEGELÄNDE**
SNOW GROOMER FOR MAINTAINING AND SHAPING SNOW TERRAIN
DAMEUR DE PISTE DESTINE A ENTRETENIR ET MODELER LES PISTES DE SKI

(43) Veröffentlichungstag der Anmeldung: 16.08.2017
(73) Patentinhaber: Kässbohrer Geländefahrzeug AG, 88471 Laupheim (DE)
(72) Erfinder: Kuhn, Michael, 88480 Achstetten (DE); Junginger, Bernd, 89134 Blaustein-Bermaringen (DE)
(74) Vertreter: Patentanwälte Ruff, Wilhelm, Beier, Dauster & Partner mbB

(56) Entgegenhaltungen:
- EP-A2- 2 639 354
- EP-B1- 1 995 159
- DE-A1- 10 160 918
- DE-A1-102012 214 386
- DE-C- 931 994
- JP-A- S 611 581
- JP-A- S5 889 480
- NL-A- 9 201 553
- US-A- 3 262 522
- US-A- 4 325 443
- US-A1- 2014 288 763
- None

## Beschreibung

Die Erfindung betrifft eine Pistenraupe zur Pflege und Gestaltung von Schneegelände mit einem Raupenfahrwerk, das auf jeder Fahrwerksseite jeweils ein Triebrad, wenigstens vier Laufräder sowie ein Spannrad aufweist, die von einer Fahrwerkskette umschlossen sind, wobei jedes Laufrad mittels einer Aufhängung an einem Fahrwerksrahmen vorgespannt gelagert ist.

Aus der EP 1 995 159 B1 ist eine Pistenraupe bekannt, bei der hohe Leistung mit guter Manövrierfähigkeit kombiniert sein sollen. Die Pistenraupe weist ein Raupenfahrwerk auf, das auf jeder Fahrwerksseite neben einem Triebrad und einem Spannrad jeweils vier Laufräder aufweist. Die gute Manövrierfähigkeit bei hoher Leistung soll erzielt werden durch unterschiedliche Achslastverteilungen auf dem Spannrad sowie auf den vier Laufrädern jeder Fahrwerksseite. Dabei erhöht sich die Achslast ausgehend von der vorderen Spannradachse aus über die vier Laufräder allmählich nach hinten, so dass die beiden hinteren Laufräder die höchste Achslast tragen müssen.

Die DE 10 2012 214 386 A1 zeigt eine Pistenraupe zur Pflege und Gestaltung von Schneegelände mit einem Raupenfahrwerk, von der die Erfindung ausgeht.

Aufgabe der Erfindung ist es, eine Pistenraupe der eingangs genannten Art zu schaffen, die ein verbessertes Steigvermögen sowie verbesserte Pflege- und Gestaltungsfunktionen für das Schneegelände aufweist.

Die Aufgabe wird gelöst durch die Merkmale des kennzeichnenden Teils von Anspruch 1.

Jede Fahrwerksseite weist jeweils fünf Laufräder auf, deren Aufhängungen eine über eine Fahrzeuglänge gesehen unterschiedliche Vorspannungsverteilung aufweisen. Erfindungsgemäß ist demzufolge eine Laufradachse mehr vorgesehen als bei bekannten Pistenraupen. Hierdurch ergibt sich ein verbessertes Steigvermögen für die Pistenraupe. Relativ zu einer Aufstandsebene der Pistenraupe ergibt sich zudem in Fahrzeuglängsrichtung eine geringere Relativneigung im Fahrbetrieb. Die zusätzliche Laufradachse ermöglicht eine längere Fahrwerkskette, die eine reduzierte Flächenpressung und demzufolge eine Schonung des befahrenen Untergrundes ermöglicht. Die zusätzliche Laufradachse ermöglicht aufgrund der hierdurch vergrößerten Aufstandslänge der Fahrwerkskette eine Schlupfreduzierung im Fahrbetrieb. Hierdurch wird auch der Kraftstoffverbrauch der Pistenraupe reduziert. Dadurch, dass die Aufhängungen der Laufräder über eine Fahrzeuglänge gesehen unterschiedliche Vorspannungsverteilungen aufweisen, ergibt sich ein verbessertes Lenkverhalten, indem ein reduzierter Wendewiderstand erzielt wird. In vorteilhafter Weise ist die Vorspannungsverteilung der Aufhängungen der Laufräder derart vorgesehen, dass die höchste Vorspannung im Bereich der Aufhängungen der beiden Fahrwerksseiten vorgesehen ist, die in der Umgebung des Fahrzeugschwerpunkts liegen.

Erfindungsgemäß ist die Vorspannungsverteilung der Aufhängungen der Laufräder derart vorgesehen, dass wenigstens ein zwischen einem vordersten und einem hintersten Laufrad angeordnetes mittleres Laufrad eine größere Vorspannung zu einem Untergrund hin aufweist als wenigstens ein nach vorne oder nach hinten benachbartes Laufrad. Bei dieser Ausgestaltung weist die Pistenraupe einen Fahrzeugschwerpunkt auf, der im Bereich der Mitte des Raupenfahrwerks liegt. Wenn das Raupenfahrwerk mit der entsprechenden Vorspannungsverteilung der Aufhängungen von einem Untergrund abgehoben wird, dann hängen die Laufräder zwangsläufig aufgrund der unterschiedlichen Vorspannungen und der durch das Anheben erfolgten Entlastung in unterschiedlichen Höhen nach unten, wobei das mittlere Laufrad mit der höchsten Vorspannung am weitesten nach unten hängt und die benachbarten Laufräder jeweils etwas weiter oben positioniert sind, so dass sich bezüglich der Achsen der Laufräder in der Seitenansicht eine konkave Krümmung nach Art einer Banane ergibt.

Weiterbildungen der Erfindung ergeben sich aus den abhängigen Unteransprüchen.

In Ausgestaltung der Erfindung ist jedes Triebrad gegenüber einer Ebene von Spannrad und Laufrädern in Fahrzeughochrichtung nach oben versetzt angeordnet. Die beschriebene Ebene von Spannrad und Laufrädern ist in fahrfertig aufstehendem Zustand der Pistenraupe auf einem Untergrund zu verstehen. Durch das Hochsetzen des Triebrades ist eine verbesserte Ausgleichsfähigkeit des Raupenfahrwerks bei Bodenunebenheiten ermöglicht.

In weiterer Ausgestaltung der Erfindung weist ein zentraler Verbrennungsmotor der Pistenraupe eine Motorleistung von mehr als 400 kW auf. Diese Motorleistung trägt dazu bei, eine Pistenraupe mit hoher Arbeitsleistung im Bereich einer Heckfräse und/oder mittels eines Räumschildes und/oder mittels einer Winde zu erzielen. Die erfindungsgemäße fünfte Laufradachse in Verbindung mit der Motorleistung von mehr als 400 kW ermöglicht eine sehr breite Auslegung der Pistenraupe und demzufolge eine Pistenbearbeitbarkeit über eine große Arbeitsbreite.

In weiterer Ausgestaltung der Erfindung sind die Laufräder jeder Fahrwerksseite in einem solchen Abstand zueinander angeordnet, dass in einem Fahrbetrieb ein Aufwölben eines Untertrums der Fahrwerkskette zwischen jeweils zwei Laufrädern zumindest weitgehend vermieden wird. Hierdurch wird ein besonders gleichmäßiger Lauf der Fahrwerkskette erzielt.

Nachfolgend ist ein bevorzugtes Ausführungsbeispiel der Erfindung beschrieben und anhand der Zeichnungen dargestellt.
- Fig. 1: zeigt in einer Seitenansicht eine Ausführungsform einer erfindungsgemäßen Pistenraupe,
- Fig. 2: die Pistenraupe nach Fig. 1 unter Weglassung der Fahrwerkskette,
- Fig. 3: die Pistenraupe nach Fig. 2 in unbelastetem Zustand von Laufrädern der Fahrwerksseite,
- Fig. 4: in einer Seitenansicht die Fahrwerksseite der Pistenraupe nach Fig. 3 mit einem Fahrwerksrahmen der Pistenraupe nach Fig. 3 und
- Fig. 5: in vergrößertem, schematischem Perspektivausschnitt einen Teilbereich der Fahrwerksseite im Bereich von zwei Aufhängungen für zwei Laufräder.

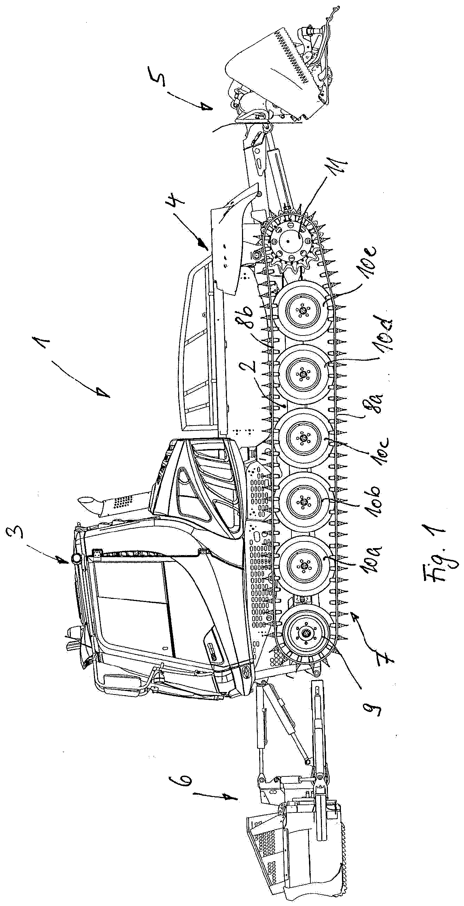

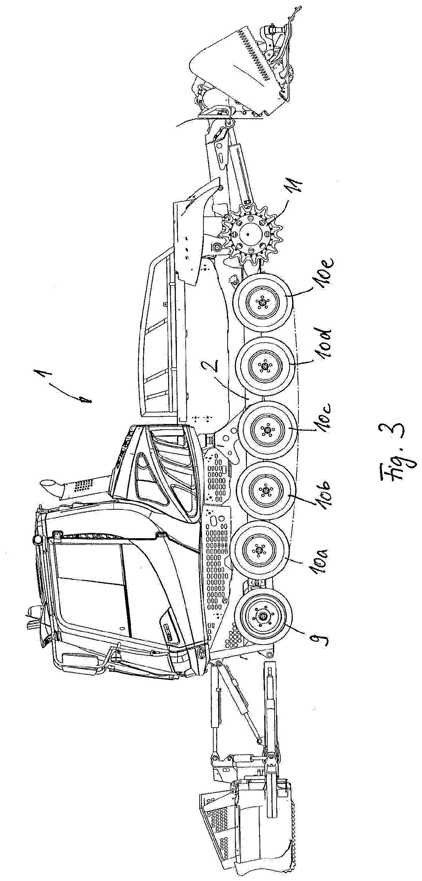

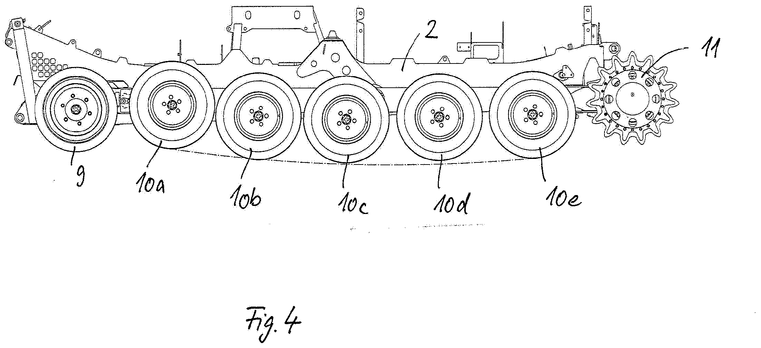

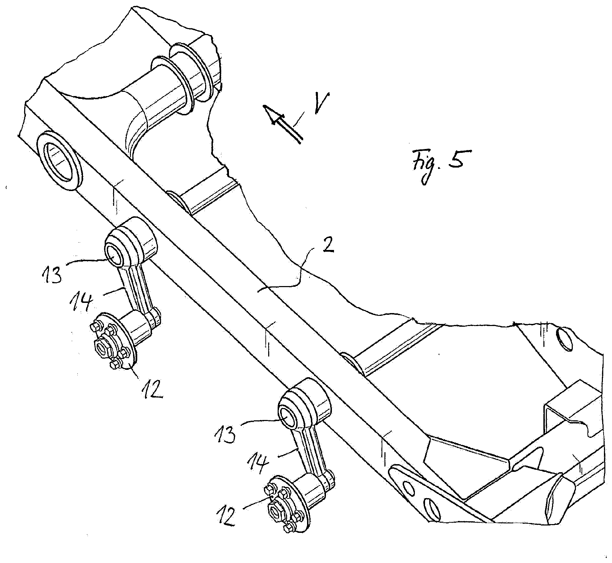

Eine Pistenraupe 1 nach den Fig. 1 bis 5 weist einen Fahrwerksrahmen 2 auf, auf dem frontseitig ein Fahrerhaus 3 sowie rückseitig eine Ladefläche 4 aufgebaut sind. Heckseitig ist an dem Fahrwerksrahmen 2 ein Heckgeräteträger vorgesehen, an dem eine Heckfräse 5 lösbar befestigt ist. Stirnseitig in einem Frontbereich der Pistenraupe 1 ist an dem Fahrwerksrahmen 2 ein Räumschild 6 vorgesehen. Auf gegenüberliegenden Längsseiten des Fahrwerksrahmens 2 ist jeweils eine Fahrwerksseite 7 eines Raupenfahrwerks vorgesehen. Jede der beiden Fahrwerksseiten 7 weist frontseitig ein Spannrad sowie in Fahrzeuglängsrichtung nach hinten fünf hintereinander angeordnete Laufräder 10a bis 10e auf. Einen rückseitigen Abschluss der Fahrwerksseite bildet ein Triebrad 11. Das Spannrad 9, die Laufräder 10a bis 10e und das Triebrad sind von einer Fahrwerkskette 8a, 8b umschlossen, die ein auf einem Untergrund laufendes Untertrum 8a sowie einem Fahrbetrieb entgegengesetzt laufendes Obertrum 8b aufweist. Das Triebrad 11 jeder Fahrwerksseite dient zum Antreiben der Fahrwerkskette 8a, 8b. Das Spannrad 9 dient zum Spannen der Fahrwerkskette 8a, 8b.

Die beiden Triebräder 11 des Raupenfahrwerks werden durch Hydromotoren eines Hydrauliksystems angetrieben, das über eine zentrale hydraulische Verstellpumpe gespeist wird. Die Verstellpumpe wird durch einen Verbrennungsmotor in Form eines Dieselmotors angetrieben, von dem in den Fig. 1 bis 3 lediglich eine Auspuffanlage erkennbar ist. Der Verbrennungsmotor ist im Fahrwerksrahmen 2 knapp hinter und unterhalb des Fahrerhauses 3 positioniert. Der Verbrennungsmotor weist eine Motorleistung von mehr als 400 kW auf. Über das Hydrauliksystem werden neben dem Antrieb des Raupenfahrwerks auch die Heckfräse 5 und das frontseitige Räumschild 6 hydraulisch versorgt und gesteuert. Zur Steuerung des Verbrennungsmotors und des Hydrauliksystems ist ein elektrisches und/oder elektronisches Steuerungssystem vorgesehen, das hier nicht näher beschrieben wird.

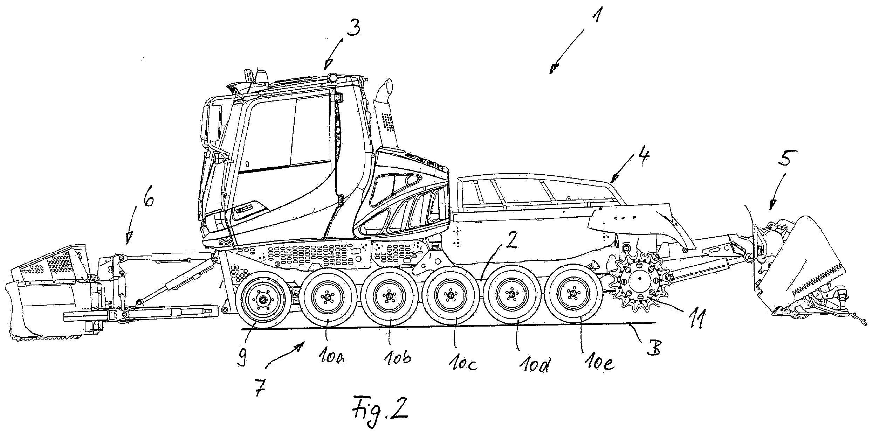

Jedes der fünf Laufräder 10a bis 10e jeder Fahrwerksseite 7 ist über jeweils eine Aufhängung 12 bis 14 an dem Fahrwerksrahmen 2 gelagert. Jede Aufhängung weist eine Radnabe 12 auf, die um eine Laufradachse drehbar an einer Aufhängungsschwinge 14 gelagert ist. Jedes Laufrad 10a bis 10e ist an der entsprechenden Laufradnabe 12 befestigt. Jede Aufhängungsschwinge 14 ist um eine zu der jeweiligen Laufradachse parallele Pendelachse schwenkbeweglich an dem Fahrwerksrahmen 2 gelagert. Die Pendelachse ist - in Vorwärtsfahrt V der Pistenraupe 1 gesehen - vor der jeweiligen Laufradachse angeordnet. Die Aufhängungsschwinge 14 ragt von der Pendelachse ausgehend schräg nach hinten und nach unten. Die Aufhängungsschwinge 14 ist über eine Vorspannungseinrichtung 13, vorliegend in Form einer Drehstabfeder, nach unten in Richtung eines Untergrundes B (Fig. 2) elastisch vorgespannt. Sobald das jeweilige Laufrad 10a bis 10e auf dem Untergrund B aufsteht, wird jede Aufhängungsschwinge 14 gegen die Vorspannungsrichtung der Vorspanneinrichtung 13 nach oben verschwenkt.

Die verschiedenen Aufhängungen 12 bis 14 der Laufräder 10a bis 10e sind mit jeweils nach vorne bzw. nach hinten reduzierten Vorspannungen und demzufolge mit reduzierten Achslasten versehen. Die so gewählte Vorspannungsverteilung der Laufräder 10a bis 10e führt dazu, dass die Pistenraupe 1 im Fahrbetrieb relativ wendig ist, da die höchste Achslast und demzufolge die höchste Vorspannung der Laufräder 10c im Bereich des Fahrzeugschwerpunktes vorhanden ist. Trotz fünf Laufrädern 10a bis 10e auf jeder Fahrwerksseite 7 und einer großen Kettenaufstandslänge der Fahrwerkskette 8a, 8b ergibt sich demzufolge für die Pistenraupe 1 ein vergleichsweise geringer Wendewiderstand, der eine gute Lenkwilligkeit der Pistenraupe 1 bewirkt.

Anhand der Fig. 1 ist erkennbar, dass die Abstände der Laufradachsen der Laufräder 10a bis 10e im Verhältnis zu dem Durchmesser der Laufräder 10a bis 10e so gewählt sind, dass das Untertrum 8a der Fahrwerkskette 8a, 8b sich im Fahrbetrieb nicht aufwölben kann in dem jeweiligen keilförmigen Zwischenraum zwischen jeweils zwei benachbarten Laufrädern 10a bis 10e. Das Triebrad 11 jeder Fahrwerksseite 7 ist gegenüber der Ebene der Laufräder 10a bis 10e und des Spannrades 9 in Fahrzeughochrichtung nach oben versetzt, wie den Fig. 1 bis 4 gut zu entnehmen ist.

## Patentansprüche

1. Pistenraupe zur Pflege und Gestaltung von Schneegelände mit einem Raupenfahrwerk, das auf jeder Fahrwerksseite (7) jeweils ein Triebrad (11), wenigstens vier Laufräder (10a bis 10e) sowie ein Spannrad (9) aufweist, die von einer Fahrwerkskette (8a, 8b) umschlossen sind, wobei jedes Laufrad (10a bis 10e) mittels einer Aufhängung (12 bis 14) an einem Fahrwerksrahmen (2) vorgespannt gelagert ist, **dadurch gekennzeichnet, dass** jede Fahrwerksseite (7) jeweils fünf Laufräder (10a bis 10e) aufweist, deren Aufhängungen (12 bis 14) eine über eine Fahrzeuglänge gesehen unterschiedliche Vorspannungsverteilung aufweisen derart, dass bei einem Abheben des Raupenfahrwerks von einem Untergrund die Laufräder (10a bis 10e) aufgrund der unterschiedlichen Vorspannungen und der durch das Anheben erfolgten Entlastung in unterschiedlichen Höhen nach unten hängen, wobei ein mittleres Laufrad (10c) mit der höchsten Vorspannung am weitesten nach unten hängt und die benachbarten Laufräder (10a, 10b, 10d, 10e) jeweils etwas weiter oben positioniert sind, so dass sich bezüglich der Achsen der Laufräder (10a bis 10e) in einer Seitenansicht eine konkave Krümmung nach Art einer Banane ergibt.

2. Pistenraupe nach Anspruch 1, **dadurch gekennzeichnet, dass** jedes Triebrad (11) gegenüber einer Ebene von Spannrad (9) und Laufrädern (10a bis 10e) in Fahrzeughochrichtung nach oben versetzt angeordnet ist.

3. Pistenraupe nach Anspruch 1, **dadurch gekennzeichnet, dass** ein zentraler Verbrennungsmotor der Pistenraupe eine Motorleistung von mehr als 400 kW aufweist.

4. Pistenraupe nach einem der vorhergehenden Ansprüche, **dadurch gekennzeichnet, dass** die Laufräder (10a bis 10e) jeder Fahrwerksseite (7) in einem solchen Abstand zueinander angeordnet sind, dass in einem Fahrbetrieb ein Aufwölben eines Untertrums (8a) der Fahrwerkskette (8a, 8b) zwischen jeweils zwei Laufrädern (10a bis 10e) zumindest weitgehend vermieden wird.

## Claims

1. Tracked piste grooming vehicle for maintenance and shaping of snowy terrain, comprising a crawler chassis which includes, on each side of the chassis (7), a respective drive wheel (11), at least four running wheels (10a to 10e) and a tension wheel (9), all enclosed by a crawler chain (8a, 8b), wherein each running wheel (10a to 10e) is mounted on a chassis frame (2) in a pretensioned manner by means of a suspension (12 to 14), **characterized in that**
each side of the chassis (7) includes five respective running wheels (10a to 10e), with the suspensions (12 to 14) thereof having a different pretensioning distribution considered over a vehicle length such that, if the crawler chassis is raised from a ground, the running wheels (10a to 10e) due to the different pretensionings and the relief caused by the lifting hang downwards in different levels, wherein a central running wheel (10c) with the highest pretensioning hangs down furthest and the adjacent running wheels (10a, 10b, 10d, 10e) each are positioned somewhat further above, so that a concave, banana-type curvature results for the axles of the running wheels (10a to 10e) in a side view.

2. Tracked piste grooming vehicle according to claim 1, **characterized in that** each drive wheel (11) is disposed upwardly offset in relation to a plane of tension wheel (9) and running wheels (10a to 10e) in the vertical direction of the vehicle.

3. Tracked piste grooming vehicle according to claim 1, **characterized in that** a central combustion engine of the tracked piste grooming vehicle has an engine power of more than 400 kW.

4. Tracked piste grooming vehicle according to any of the preceding claims, **characterized in that** the running wheels (10a to 10e) of each side of the chassis (7) are disposed at such a distance to each other that during vehicle operation bending up of a lower run (8a) of the crawler chain (8a, 8b) between two respective running wheels (10a to 10e) is prevented at least largely.

## Revendications

1. Dameuse de piste destinée à entretenir et modeler un terrain enneigé, comprenant un châssis à chenilles qui présente sur chaque côté du châssis (7) une roue motrice (11) respective, au moins quatre roues de roulement (10a à 10e) ainsi qu'une roue de tension (9) entourées par une chenille de châssis (8a, 8b), chaque roue de roulement (10a à 10e) étant montée précontrainte sur un cadre de châssis (2) par le biais d'une suspension (12 à 14),
**caractérisée en ce que**
chaque côté du châssis (7) présente respectivement cinq roues de roulement (10a à 10e), les suspensions (12 à 14) desdites roues présentent une répartition de la précontrainte différente vue sur une longueur de véhicule de telle manière que lors d'un levage du châssis à chenilles d'un sol les roues de roulement (10a à 10e) pendent vers le bas à des hauteurs différentes en raison des précontraintes différentes et le délestage résultant du soulèvement, une roue de roulement centrale (10c) avec la précontrainte la plus suprême pendant vers le bas le plus loin et les roues de roulement adjacentes (10a, 10b, 10d, 10e) étant positionnées respectivement quelque peu plus haut de sorte qu'une courbure concave, à la façon d'une banane, résulte par rapport aux axes des roues de roulement (10a à 10e) vue de côté.

2. Dameuse de piste selon la revendication 1, **caractérisée en ce que** chaque roue motrice (11) est disposée décalée vers le haut dans la direction verticale du véhicule par rapport à un plan de roue de tension (9) et roues de roulement (10a à 10e).

3. Dameuse de piste selon la revendication 1, **caractérisée en ce qu'**un moteur à combustion central de la dameuse de piste présente une puissance du moteur de plus de 400 kW.

4. Dameuse de piste selon l'une quelconque des revendications précédentes, **caractérisée en ce que** les roues de roulement (10a à 10e) de chaque côté du châssis (7) sont disposées à une distance l'une de l'autre de telle sorte que dans une opération de conduite un bombage d'une partie inférieure (8a) de la chenille de châssis (8a, 8b) entre à chaque fois deux roues de roulement (10a à 10e) est évité au moins largement.
